# EUROPÄISCHE PATENTSCHRIFT

(11) **EP 3 298 805 B1**
(45) Veröffentlichungstag und Bekanntmachung des Hinweises auf die Patenterteilung: **12.09.2018**
(21) Anmeldenummer: 16725365.7
(22) Anmeldetag: 18.05.2016
(51) Int. Cl.: H04W 84/00, H04L 29/08, H04W 4/46

(54) **VERFAHREN, KRAFTFAHRZEUG UND SYSTEM ZUM FESTLEGEN EINES ÜBERTRAGUNGSPFADES**
METHOD, VEHICLE AND SYSTEM FOR DETERMINING A ROUTING PATH
PROCÉDÉ, VÉHICULE ET SYSTÈME POUR DÉTERMINER UN CHEMIN DE ROUTAGE

(30) Priorität: 22.05.2015 DE 102015006674
(43) Veröffentlichungstag der Anmeldung: 28.03.2018
(73) Patentinhaber: AUDI AG, 85045 Ingolstadt (DE)
(72) Erfinder: FRIEDMANN, Felix, 85376 Massenhausen (DE)
(86) Internationale Anmeldenummer: PCT/EP2016/000822
(87) Internationale Veröffentlichungsnummer: WO 2016/188621

(56) Entgegenhaltungen:
- QING YANG ET AL: "ACAR: Adaptive Connectivity Aware Routing for Vehicular Ad Hoc Networks in City Scenarios", MOBILE NETWORKS AND APPLICATIONS, KLUWER ACADEMIC PUBLISHERS, BO, Bd. 15, Nr. 1, 22. Mai 2009 (2009-05-22), Seiten 36-60, XP019773128, ISSN: 1572-8153
- QING YANG ET AL: "ACAR: Adaptive Connectivity Aware Routing Protocol for Vehicular Ad Hoc Networks", COMPUTER COMMUNICATIONS AND NETWORKS, 2008. ICCCN '08. PROCEEDINGS OF 17TH INTERNATIONAL CONFERENCE ON, IEEE, PISCATAWAY, NJ, USA, 3. August 2008 (2008-08-03), Seiten 1-6, XP031825210, DOI: 10.1109/ICCCN.2008.ECP.107 ISBN: 978-1-4244-2389-7

## Beschreibung

Die Erfindung betrifft ein Verfahren zum Bestimmen eines Kommunikationsnetzes für das Sammeln von Information in einem Umfeld eines Kraftfahrzeugs. Es wird mit einer Kommunikationseinheit des Kraftfahrzeugs eine Anfragenachricht ausgesendet. Die Anfragenachricht wird von einer jeweiligen Kommunikationseinheit zumindest eines ersten Fremdfahrzeugs empfangen. Durch die jeweilige Kommunikationseinheit des Fremdfahrzeugs wird eine erste Antwortnachricht an die Kommunikationseinheit des Kraftfahrzeugs übertragen. Die Erfindung betrifft auch ein Kraftfahrzeug mit einer Kommunikationseinheit, wie auch ein System mit einem Kraftfahrzeug.

Verfahren zum Bestimmen eines Kommunikationsnetzes für das Sammeln von Information sind aus dem Stand der Technik bekannt. So können Fahrzeuge beispielsweise Informationen direkt über drahtlose Funkverbindungen oder indirekt über eine Mobilfunkfunkverbindung zu einem fahrzeugexternen Server miteinander austauschen. Fahrzeuge können so beispielsweise an die Sensordaten anderer Fahrzeuge gelangen.

So sind beispielsweise Fahrzeug-zu-X-Kommunikationen bekannt. Es offenbart die DE 10 2010 028 613 A1 eine Kommunikationsvorrichtung mit einer Funkschlüssel-zu-X-Kommunikation. Die Funkschlüssel-zu-X-Kommunikation kann zwischen zwei, mit dieser Funkschlüssel-Kommunikationstechnik ausgestatteten Fahrzeugen genutzt werden, um Daten wie Positionen, Wetterverhältnisse oder Warnungen zu kommunizieren.

Aus der US 2012/0095641 A1 ist ein Verfahren für eine drahtlose Kommunikation zwischen Fahrzeugen bekannt. Es wird eine Fahrinformation über ein Umfeld eines zweiten Fahrzeugs von dem zweiten Fahrzeug zu einem ersten Fahrzeug übertragen.

In der EP 1 919 164 A1 wird ein Verfahren zum Sammeln von Daten in einem anfragenden Fahrzeug beschrieben. Es wird ein Zielgebiet bestimmt. Das Zielgebiet wird in sich überlappende Teilbereiche unterteilt. Für jeden Teilbereich wird ein Datenpaket an ein Fahrzeug in dem Teilbereich übertragen. Das Datenpaket umfasst eine Anfrage. Schließlich werden Daten als Antworten auf das anfragende Datenpaket aus den Teilbereichen an das anfragende Fahrzeug übertragen.

Nachteilig am Stand der Technik ist, dass Mobilfunkverbindungen nur funktionieren, wenn sich beide Fahrzeuge in einem Gebiet befinden, in dem Mobilfunk mit ausreichend guter Verbindungsqualität verfügbar ist. Dies ist üblicherweise in ländlichen Gebieten oder in isolierten Räumen wie beispielsweise einer Tiefgarage oder einem Tunnel oder während Naturkatastrophen nicht möglich. Die direkte Funkverbindung zwischen zwei Fahrzeugen unterliegt üblicherweise einer stark eingeschränkten Reichweite.

In der DE 199 03 909 A1 ist ein Verfahren zur Gewinnung von relevanten Verkehrsinformationen und zur dynamischen Optimierung einer Route eines Fahrzeugs beschrieben, welches einem selbstorganisierenden Verkehrsleitsystem angehört. Bei dem Verfahren erstellt das Fahrzeug zunächst Daten auf Basis fahrzeugeigener Sensoren und/oder anderer Informationsquellen. Anschließend werden für das Fahrzeug oder andere Fahrzeuge relevante Daten ausgesendet und die ausgesendeten Daten der anderen Fahrzeuge empfangen und gespeichert. Schließlich werden Anfragen von dem Fahrzeug bezüglich Daten erstellt und gesendet, die andere Fahrzeuge bereitstellen könnten.

Aus der US 2013/0099941 A1 gehen eine Fahrzeug-zu-Fahrzeug-Kommunikation und eine Fahrzeug-zu-X-Kömmunikation hervor. Dabei bewegt sich ein Fahrzeug entlang einer Strecke und frägt bei anderen Fahrzeugen oder Einheiten nach Informationen an. Bei diesen Informationen kann es sich beispielsweise Verkehrsinformationen handeln.

Aus der XP031089373 geht ein Multi-Hop Routing Protokol für städtische Ad-Hoc Netzwerke hervor. Dabei Flutet ein Sender das Netzwerk mit einer Route Request Nachricht. Der Empfänger berechtet dann den besten Übertragungspfad.

Es ist Aufgabe der Erfindung, ein Verfahren, ein Kraftfahrzeug sowie ein System bereitzustellen, mit welchem beziehungsweise bei welchem ein Kommunikationsnetz für das Sammeln von Information zuverlässiger und mit höherer Reichweite bestimmt werden kann.

Diese Aufgabe wird erfindungsgemäß durch ein Verfahren, durch ein Kraftfahrzeug sowie durch ein System mit den Merkmalen gemäß den jeweiligen unabhängigen Ansprüchen gelöst.

Bei einem erfindungsgemäßen Verfahren wird ein Kommunikationsnetz für das Sammeln von Information in einem Umfeld eines Kraftfahrzeugs bestimmt. Es wird mittels einer Kommunikationseinheit des Kraftfahrzeugs eine Anfragenachricht ausgesendet. Die Anfragenachricht wird von einer jeweiligen Kommunikationseinheit zumindest eines ersten Fremdfahrzeugs empfangen. Durch die jeweilige Kommunikationseinheit des Fremdfahrzeugs wird eine erste Antwortnachricht an die Kommunikationseinheit des Kraftfahrzeugs übertragen. Als ein wesentlicher Gedanke der Erfindung ist vorgesehen, dass jeweils die Anfragenachricht mittels der Kommunikationseinheit jedes ersten Fremdfahrzeugs an eine Kommunikationseinheit zumindest eines jeweiligen zweiten Fremdfahrzeugs übertragen wird. Mittels der Kommunikationseinheit des jeweils zweiten Fremdfahrzeugs wird eine zweite Antwortnachricht zu der Kommunikationseinheit des ersten Fremdfahrzeugs und von dort an die Kommunikationseinheit des Kraftfahrzeugs übertragen. Mit den Antwortnachrichten wird zumindest eine aktuelle Position des jeweiligen Fremdfahrzeugs übertragen. Abhängig von den Antwortnachrichten wird ein Netzplan des Kommunikationsnetzes durch zumindest das Kraftfahrzeug bestimmt. Weiterhin wird auf Grundlage des Netzplans ein eindeutiger Übertragungspfad zu einem der Fremdfahrzeuge für eine weitere Anfragenachricht des Kraftfahrzeugs zum Sammeln der Information von einem der Fremdfahrzeuge festgelegt.

Durch das erfindungsgemäße Verfahren wird es möglich, dass das Kommunikationsnetz für das Sammeln der Information zuverlässiger bereitgestellt wird und dabei auch das Sammeln der Information in einem größeren Gebiet beziehungsweise in dem Umfeld erfolgen kann.

Mit dem Kraftfahrzeug wird das Ego-Fahrzeug beschrieben, während mit den Fremdfahrzeugen andere Kraftfahrzeuge in dem Umfeld des Ego-Fahrzeugs beschrieben werden. So beschreibt das zumindest eine erste Fremdfahrzeug eine Gruppe von Fremdfahrzeugen, welche die Anfragenachricht direkt von dem Kraftfahrzeug erhalten. Durch das zumindest eine zweite Fremdfahrzeug wird eine Gruppe von Fremdfahrzeugen beschrieben, welche die Anfragenachricht direkt von einem der ersten Fremdfahrzeuge erhalten und somit die Anfragenachricht nur indirekt von dem Kraftfahrzeug erhalten. Das Übertragen der Anfragenachrichten und der Antwortnachrichten erfolgt insbesondere über eine drahtlose Funkverbindung, welche von den jeweiligen Kommunikationseinheiten bereitgestellt wird. Die drahtlose Funkverbindung ist insbesondere anders als eine Mobilfunkverbindung ausgebildet. Die Funkverbindung wird also vorzugsweise nicht nach einem Mobilfunkstandard betrieben, beispielsweise also nach einem WLAN-Standard oder Car-to-Car-Standard. Vorteilhaft ist dies, da dadurch das Kommunikationsnetz auch in Gebieten ohne Mobilfunkversorgung bereitgestellt werden kann.

Die ersten Anfragenachrichten werden insbesondere uneindeutig, also in Form einer Broadcastnachricht, ausgesendet. Wenn der Netzplan dann bestimmt ist, kann auf dessen Grundlage der eindeutige Übertragungspfad für die weitere Anfragenachricht des Kraftfahrzeugs zum Sammeln der Information festgelegt werden. Durch den eindeutigen Übertragungspfad können nun bestimmte Fremdfahrzeuge angesprochen werden, welche entweder die Information sammeln beziehungsweise bereitstellen und/oder welche die Information lediglich weiterleiten, da die Fremdfahrzeuge, welche die Information bereitstellen, zu weit von dem Kraftfahrzeug entfernt sind, um diese direkt an das Kraftfahrzeug zu übertragen.

Die gesammelte Information kann eine Vielzahl von Sensordaten des jeweiligen Fremdfahrzeugs umfassen. So können die Sensordaten beispielsweise Auskunft über Verkehrsstörungen und/oder Unfälle in einem Umgebungsbereich eines der Fremdfahrzeuge geben. Weiterhin können die Sensordaten des jeweiligen Fremdfahrzeugs beispielsweise auch zur Parkplatzsuche genutzt werden. Die konkrete Information, welche mit der weiteren Anfragenachricht bezogen werden soll, kann von dem Kraftfahrzeug, insbesondere abhängig von einer Netzeigenschaft des Kommunikationsnetzes, festgelegt werden. Insbesondere ist jedoch festgelegt, dass die Information über den eindeutigen Übertragungspfad bezogen wird und somit auch Bilddaten als die Information übertragen werden kann. So können beispielsweise auch Bilder von einer Kamera eines Fremdfahrzeugs über den eindeutigen Übertragungspfad zu dem Kraftfahrzeug übertragen werden.

Die gesammelte Information kann beispielsweise auch dazu genutzt werden, um eine aktuelle Situation hinsichtlich Parkmöglichkeiten und/oder Fußgängerdichte und/oder Fahrradfahrerdichte und/oder des Vorhandenseins bestimmter Objekte, insbesondere Einsatzfahrzeuge, Ladestationen für Elektrofahrzeuge oder Kommunikationsfähige Geräte zur Identifikation von Gebäuden, beispielsweise Banken, Tankstellen oder Werkstätten, in dem Umgebungsbereich des jeweiligen Fremdfahrzeugs zu ermitteln.

Erfindungsgemäß ist vorgesehen, dass eine Netzeigenschaft des Kommunikationsnetzes zur Bewertung des Kommunikationsnetzes durch das Kraftfahrzeug bestimmt wird, und auf Grundlage der Netzeigenschaft der Übertragungspfad festgelegt wird. Durch die Netzeigenschaft können beispielsweise eine räumliche Abdeckung des Kommunikationsnetzes und/oder eine Übertragungsqualität von dem Kraftfahrzeug zu einem der Fremdfahrzeuge bestimmt werden. So sendet das Kraftfahrzeug die Anfragenachricht ohne einen konkreten Empfänger beziehungsweise ohne, dass diese an ein konkretes Fremdfahrzeug gerichtet ist, aus, und jedes Fremdfahrzeug, das die Anfragenachricht empfängt und insbesondere noch nicht bereits vorher empfangen hat, verbreitet diese weiter und sendet eine Antwortnachricht. Die jeweilige Antwortnachricht wird insbesondere mit Verbindungseigenschaften beziehungsweise Verbindungscharakteristika, beispielsweise dem Datendurchsatz zwischen den Fremdfahrzeugen, an das Kraftfahrzeug übertragen. So kann nach dem Eintreffen der Antwortnachrichten beim Kraftfahrzeug die Netzeigenschaft des Kommunikationsnetzes bestimmt werden. Anhand der Netzeigenschaft können nun die besten Verbindungen zwischen dem Kraftfahrzeug und den Fremdfahrzeugen und/oder den Fremdfahrzeugen untereinander gefunden werden, welche die Anforderungen konkreter Anwendungen beispielsweise hinsichtlich Übertragungsrate und/oder Verzögerung und/oder Stabilität erfüllen. Erfindungsgemäß wird hier dabei eine Wahrscheinlichkeit abgeschätzt, dass die weitere Anfragenachricht für die Ausführung einer konkreten Aufgabe vom Kraftfahrzeug über das erste Fremdfahrzeug zu dem zweiten Fremdfahrzeug beziehungsweise dem Fremdfahrzeug im Zielgebiet beziehungsweise dem Zielfremdfahrzeug weitergeleitet wird. Das zweite Fremdfahrzeug ist insbesondere mit den nötigen Sensoren ausgestattet, um die Information, welche mit der weiteren Anfragenachricht angefordert wird, bereitzustellen. Die Information von dem Fremdfahrzeug im Zielgebiet kann dann über die Fremdfahrzeuge, welche sich noch in dem Kommunikationsnetz befinden, zurückübertragen werden. Anhand dieser Wahrscheinlichkeit kann von dem Kraftfahrzeug entschieden werden, ob die weitere Anfragenachricht beziehungsweise der Auftrag ausgegeben wird oder nicht. So kann nach dem Bestimmen der Netzeigenschaft die weitere Anfragenachricht beispielsweise über eine definierte Verbindung zwischen den Fremdfahrzeugen übertragen werden, bei welcher bereits konkrete Fremdfahrzeuge zum Übertragen der Anfragenachricht und/oder der Antwortnachricht berücksichtigt werden sollen. So kann bei der definierten Verbindung auch eine Reihenfolge der Fremdfahrzeuge festgelegt werden, in welcher diese die Information weiterzugeben haben. Ergänzend oder alternativ kann auch eine undefinierte Verbindung zwischen den Fremdfahrzeugen vorgesehen sein. So können beispielsweise ein Zielort und eine Entfernungslogik mit übertragen oder in den jeweiligen Fremdfahrzeugen hinterlegt sein. Die Entfernungslogik kann dabei definieren, unter welchen Umständen die weitere Anfragenachricht verworfen werden soll. So kann dies beispielsweise getan werden, wenn eines der Fremdfahrzeuge zu weit entfernt vom direkten Übertragungsweg zum Zielort ist. Darüber hinaus ist auch eine Mischung der definierten Verbindung und der Undefinierten Verbindung als teilweise definierte Verbindung möglich.

Weiterhin ist es vorzugsweise vorgesehen, dass die jeweilige Anfragenachricht abhängig von zumindest einem Beschränkungskriterium an weitere Fremdfahrzeuge weiter übertragen wird. So kann das Beschränkungskriterium beispielsweise hinsichtlich eines Abstands von dem Kraftfahrzeug zu einem der Fremdfahrzeuge, beispielsweise kleiner als 100 Kilometer, und/oder einem Aufenthaltsort und/oder einer Verbindungsqualität beziehungsweise Übertragungsqualität und/oder einer maximalen Anzahl von zu verbindenden Fremdfahrzeugen beschrieben werden. Durch das Beschränkungskriterium kann die Ausdehnung des Kommunikationsnetzes gesteuert und/oder begrenzt werden. So kann dadurch beispielsweise ein Schneeballeffekt vermieden werden. Fremdfahrzeuge, welche die Anfragenachricht erhalten, können beispielsweise aufgrund von mit in der Anfragenachricht enthaltenen Informationen überprüfen, ob eines der Beschränkungskriterien verletzt wird und gegebenenfalls die Anfragenachricht verwerfen.

Weiterhin kann es vorgesehen sein, dass die Kommunikationseinheit des ersten Fremdfahrzeugs vor dem Übertragen der ersten Antwortnachricht auf den Empfang der zweiten Antwortnachricht von dem zweiten Fremdfahrzeug wartet und die zweite Antwortnachricht beim Übertragen der ersten Antwortnachricht von der ersten Antwortnachricht umfasst wird. Vorteilhaft ist dies, da dadurch die Anzahl der gleichzeitig aktiven Verbindung reduziert werden kann. Somit kann die erforderliche Kapazität der drahtlosen Funkverbindung zum Übertragen der Antwortnachrichten zuverlässiger bereitgestellt werden.

Insbesondere ist vorgesehen, dass der Netzplan des Kommunikationsnetzes anhand der Antwortnachrichten in vorbestimmten zeitlichen Abständen, insbesondere durch das Kraftfahrzeug, angepasst wird. So wird zusammen mit den Antwortnachrichten beispielsweise eine Reiseinformation des jeweiligen Fremdfahrzeugs übertragen. Die Reiseinformation kann beispielsweise Information von dem Navigationsgerät des jeweiligen Fremdfahrzeugs sein oder Auskunft über das Reiseziel des jeweiligen Fremdfahrzeugs umfassen. Somit kann beispielsweise auch zusammen mit einer Geschwindigkeit des jeweiligen Fremdfahrzeugs vermutet werden, zu welcher Zeit sich das jeweilige Fremdfahrzeug an einem bestimmten Ort befindet. So kann beispielsweise auch bestimmt werden, ob das jeweilige Fremdfahrzeug sich zu einer vorbestimmten Uhrzeit noch innerhalb des Kommunikationsnetzes befindet oder nicht. Der Netzplan des Kommunikationsnetzes wird also anhand der Antwortnachrichten extrapoliert. Die vorbestimmten zeitlichen Abstände, zu denen der Netzplan angepasst wird, können beispielsweise hinsichtlich einer räumlichen Ausdehnung des Kommunikationsnetzes bestimmt werden. Das Anpassen des Netzplans wird insbesondere durch das Kraftfahrzeug durchgeführt. Es kann aber auch vorgesehen sein, dass der Netzplan an eine andere Einrichtung, beispielsweise einen externen Server, übertragen wird und der Netzplan dort angepasst wird. Durch das Anpassen des Netzplans können auch Prognosen bereitgestellt werden, wie der Netzplan zu einem bestimmten Zeitpunkt in der Zukunft vorliegen kann.

Weiterhin ist insbesondere vorgesehen, dass von der Information zumindest eine Reiseinformation des Fremdfahrzeugs und/oder eine Sensorinformation des Fremdfahrzeugs umfasst werden. So wird von der Reiseinformation beispielsweise ein Ziel des Fremdfahrzeugs und/oder eine Geschwindigkeit des Fremdfahrzeugs umfasst, welche beispielsweise von einem Navigationsgerät des jeweiligen Fremdfahrzeugs bereitgestellt werden kann. Durch die Sensorinformation des Fremdfahrzeugs können beispielsweise Sensordaten eines Umfeldsensors, beispielsweise einer Kamera und/oder eines Radarsensors und/oder eines Ultraschallsensors und/oder eines Lidarsensors, umfasst sein. Es können aber auch andere Sensordaten, wie beispielsweise eine Gier-, Nick- oder Rollrate des Fremdfahrzeugs umfasst sein. Es kann aber auch lediglich die Sensorausstattung des jeweiligen Fremdfahrzeugs mitgeteilt werden, um dadurch dem Kraftfahrzeug zu zeigen, welche Information überhaupt bereitgestellt werden kann. Durch die Reiseinformation beziehungsweise eine Fahrtcharakteristik des jeweiligen Fremdfahrzeugs kann zudem auch eine Beschleunigung des Fremdfahrzeugs und/oder ein geschätzter Fahrtverlauf des Fremdfahrzeugs beschrieben werden.

Weiterhin kann es vorgesehen sein, dass der Netzplan an zumindest eines der Fremdfahrzeuge und/oder einen fahrzeugexternen Server übertragen wird. So kann dies hilfreich sein, da der Netzplan nun nicht mehr von jedem der Fremdfahrzeuge selbst bestimmt werden muss. Es kann also auf den durch das Kraftfahrzeug bestimmten Netzplan des Kommunikationsnetzes auch mittels der Fremdfahrzeuge zurückgegriffen werden. Durch das Übertragen des Netzplans an den fahrzeugexternen Server kann beispielsweise Berechnungsaufwand in dem Kraftfahrzeug verringert werden. So kann das Anpassen des Netzplans in den vorbestimmten zeitlichen Abständen beispielsweise durch den fahrzeugexternen Server übernommen werden. Weiterhin können in dem fahrzeugexternen Server beispielsweise andere Netzpläne von anderen Kraftfahrzeugen miteinander fusioniert werden. Bei der Fusionierung können die Netzpläne dann beispielsweise auch plausibilisiert und verbessert werden beziehungsweise auf Fehler überprüft werden. Weiterhin kann bei der Übertragung des Netzplans von dem fahrzeugexternen Server zu einem anderen fahrzeugexternen Server beispielsweise eine Mobilfunkverbindung genutzt werden, um größere Strecken zu überbrücken.

Die Erfindung betrifft auch ein Kraftfahrzeug mit einer Kommunikationseinheit. Das Kraftfahrzeug ist dazu ausgebildet, Anfragenachrichten an Fremdfahrzeuge zu senden und/oder Antwortnachrichten von Fremdfahrzeugen zu empfangen, und davon abhängig einen Netzplan eines Kommunikationsnetzes zu bestimmen, und auf Grundlage des Netzplans einen eindeutigen Übertragungspfad für weitere Anfragenachrichten des Kraftfahrzeugs zum Sammeln von Information zu bestimmen.

Zudem betrifft die Erfindung ein System mit einem erfindungsgemäßen Kraftfahrzeug und zumindest einem Fremdfahrzeug mit einer Kommunikationseinheit. Das System ist dazu ausgelegt, ein erfindungsgemäßes Verfahren durchzuführen.

Es kann vorgesehen sein, dass das System einen fahrzeugexternen Server umfasst, welcher dazu ausgebildet ist, den von dem Kraftfahrzeug übermittelten Netzplan für die Fremdfahrzeuge und/oder weitere Fremdfahrzeuge bereitzustellen. Dadurch kann der Netzplan nicht nur von dem Kraftfahrzeug selbst genutzt werden, sondern er kann über den fahrzeugexternen Server auch für die Fremdfahrzeuge bereitgestellt werden. Hierdurch kann dem Fremdfahrzeug beispielsweise die Arbeit erspart werden, den Netzplan selbst zu bestimmen oder das Fremdfahrzeug kann den Netzplan bereitgestellt bekommen, obwohl es selbst nicht in der Lage gewesen wäre, den Netzplan zu bestimmen. Durch den Netzplan kann das Fremdfahrzeug nun selbst einen eindeutigen Übertragungspfad für eine weitere Anfragenachricht zum Sammeln von Information festlegen.

Die mit Bezug auf das erfindungsgemäße Verfahren vorgestellten bevorzugten Ausführungsformen und deren Vorteile gelten entsprechend für das erfindungsgemäße Kraftfahrzeug sowie für das erfindungsgemäße System.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Ausführungsbeispiele der Erfindung werden nachfolgend anhand schematischer Zeichnungen näher erläutert.

Dabei zeigen:
- Fig. 1: eine schematische Darstellung einer Ausführungsform eines erfindungsgemäßen Kraftfahrzeugs mit einer Kommunikationseinheit;
- Fig. 2: eine schematische Darstellung einer Ausführungsform eines erfindungsgemäßen Systems mit dem Kraftfahrzeug beim Aussenden einer Anfragenachricht an ein Fremdfahrzeug;
- Fig. 3: eine schematische Darstellung des Systems mit dem Kraftfahrzeug beim Empfangen einer Antwortnachricht von einem Fremdfahrzeug;
- Fig. 4: eine schematische Darstellung eines Netzplans eines Kommunikationsnetzes, welcher durch das Kraftfahrzeug bestimmt wird;
- Fig. 5: eine schematische Darstellung des anhand der Antwortnachrichten angepassten Netzplans des Kommunikationsnetzes; und
- Fig. 6: eine schematische Darstellung des Netzplans mit einer Netzeigenschaft zur Bewertung des Kommunikationsnetzes.

In den Figuren werden gleiche oder funktionsgleiche Elemente mit den gleichen Bezugszeichen versehen.

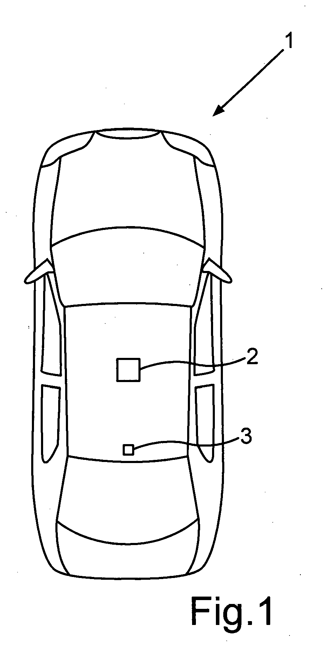

In Fig. 1 ist schematisch ein Kraftfahrzeug 1 mit einer Kommunikationseinheit 2 dargestellt. Die Kommunikationseinheit 2 ist dazu ausgebildet, Anfragenachrichten an Fremdfahrzeuge zu senden und/oder Antwortnachrichten von Fremdfahrzeugen zu empfangen. Die Kommunikationseinheit 2 nutzt dazu vorzugsweise eine drahtlose Funkverbindung. Die drahtlose Funkverbindung kann als Mobilfunkverbindung, beispielsweise nach dem GSM-, dem UMTS- oder dem LTE-Standard betrieben werden. Vorzugsweise liegt die drahtlose Funkverbindung der Kommunikationseinheit 2 zu anderen Kommunikationseinheiten, jedoch nicht nach einem der jeweiligen Mobilfunkstandards vor, sondern nutzt hierzu andere Standards und/oder Funkfrequenzen. Die Anordnung der Kommunikationseinheit 2 an dem Kraftfahrzeug 1 ist vielfältig möglich. Gemäß dem Ausführungsbeispiel umfasst das Kraftfahrzeug 1 weiterhin einen GNSS-Empfänger 3, um die Position zu bestimmen. Weiterhin kann die Kommunikationseinheit 2 dazu ausgebildet sein, eine Verbindung mit einem nicht näher dargestellten fahrzeugexternen Server herzustellen. Die Kommunikationseinheit 2 umfasst auch eine Recheneinrichtung. Die Recheneinrichtung kann in die Kommunikationseinheit 2 integriert sein oder separat zu der Kommunikationseinheit 2 ausgebildet sein.

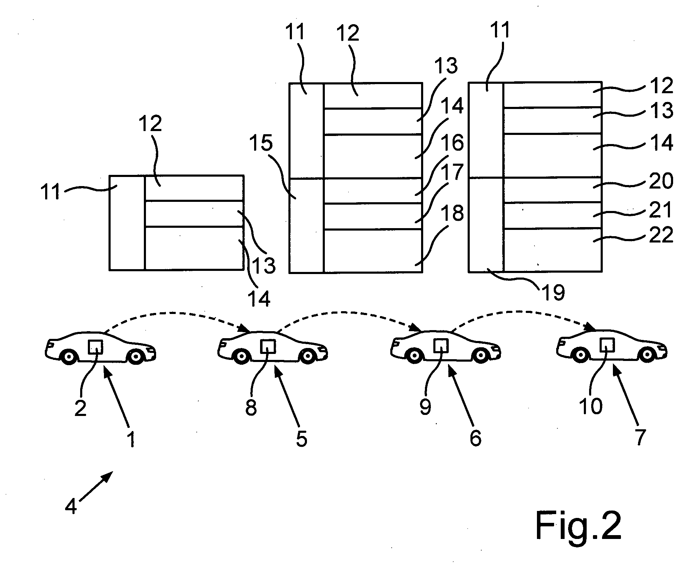

Fig. 2 zeigt ein System 4 mit dem Kraftfahrzeug 1, einer Gruppe von ersten Fremdfahrzeugen 5, einer Gruppe von zweiten Fremdfahrzeugen 6 und einer Gruppe von dritten Fremdfahrzeugen 7. Durch das erste Fremdfahrzeug 5, das zweite Fremdfahrzeug 6 und das dritte Fremdfahrzeug 7 wird jeweils eine Gruppe von Kraftfahrzeugen beschrieben. Die ersten Fremdfahrzeuge 5 weisen jeweils eine Kommunikationseinheit 8 auf. Die zweiten Fremdfahrzeuge 6 weisen jeweils eine Kommunikationseinheit 9 auf. Weiterhin weisen die dritten Fremdfahrzeuge 7 jeweils eine Kommunikationseinheit 10 auf.

Das Kraftfahrzeug 1 sendet nun mittels der Kommunikationseinheit 2 eine Anfragenachricht 11 aus. Die Anfragenachricht 11 umfasst eine Transaktions-ID 12, einen Zeitstempel 13 des Kraftfahrzeugs 1 und eine Reiseinformation 14 des Kraftfahrzeugs 1. Die Anfragenachricht 11 wird von der Kommunikationseinheit 8 des ersten Fremdfahrzeugs 5 empfangen. Anhand der Transaktions-ID 12 kann das erste Fremdfahrzeug 5 überprüfen, ob es diese Anfragenachricht 11 mit dieser Transaktions-ID 12 bereits empfangen hat und gegebenenfalls verwerfen. Mit der Anfragenachricht 11 kann auch ein Beschränkungskriterium übertragen werden, anhand welchem das erste Fremdfahrzeug 5 überprüfen kann, ob die Anfragenachricht 11 dieses Beschränkungskriterium erfüllt.

Wird die Anfragenachricht 11 also von dem ersten Fremdfahrzeug 5 akzeptiert, dann wird die Anfragenachricht 11 zusammen mit einer Senderidentität 15 des ersten Fremdfahrzeugs 5 weiter ausgesendet. Die Senderidentität 15 umfasst dabei einen Zeitstempel 16 des ersten Fremdfahrzeugs 5, eine Fahrzeug-ID 17 des ersten Fremdfahrzeugs 5 und eine Reiseinformation 18 des ersten Fremdfahrzeugs 5. Die Anfragenachricht 11 wird zusammen mit der Senderidentität 15 von zumindest einem der zweiten Fremdfahrzeuge 6 mittels der jeweiligen Kommunikationseinheit 9 empfangen. Das Empfangen der Anfragenachricht 11 durch das zweite Fremdfahrzeug 6 ist dabei ebenfalls an das Beschränkungskriterium geknüpft. Auch an das Beschränkungskriterium ist das Weitersenden der Anfragenachricht 11 durch das zweite Fremdfahrzeug 6 geknüpft. Wird die Anfragenachricht 11 also von dem zweiten Fremdfahrzeug 6 weitergesendet, so geschieht dies zusammen mit einer Senderidentität 19 des zweiten Fremdfahrzeugs 6. Die Senderidentität 19 des zweiten Fremdfahrzeugs 6 umfasst einen Zeitstempel 20 des zweiten Fremdfahrzeugs 6, eine Fahrzeug-ID 21 des zweiten Fremdfahrzeugs 6 und eine Reiseinformation 22 des zweiten Fremdfahrzeugs 6. Durch die jeweilige Reiseinformation 14, 22 beziehungsweise die Fahrtcharakteristika des jeweiligen Fremdfahrzeugs 5, 6, 7 wird beispielsweise eine Position und/oder eine Geschwindigkeit und/oder eine Beschleunigung und/oder ein Navigationsziel und/oder ein geschätzter Fahrtverlauf des jeweiligen Fremdfahrzeugs 5, 6, 7 beschrieben. Die jeweilige Fahrzeug-ID 17, 21 kann beispielsweise zufällig generiert werden. Durch die jeweilige Senderidentität 15, 19 kann das jeweilige Fremdfahrzeug 5, 6, 7 insbesondere eindeutig zugeordnet werden. Fremdfahrzeuge 5, 6, 7, welche die Anfragenachricht 11 zusammen mit den Senderidentitäten 15, 19 eines anderen Fremdfahrzeugs 5, 6, 7 erhalten, ersetzen die Senderidentität 15, 19 durch ihre eigene, bevor sie die Anfragenachricht 11 weiterverbreiten.

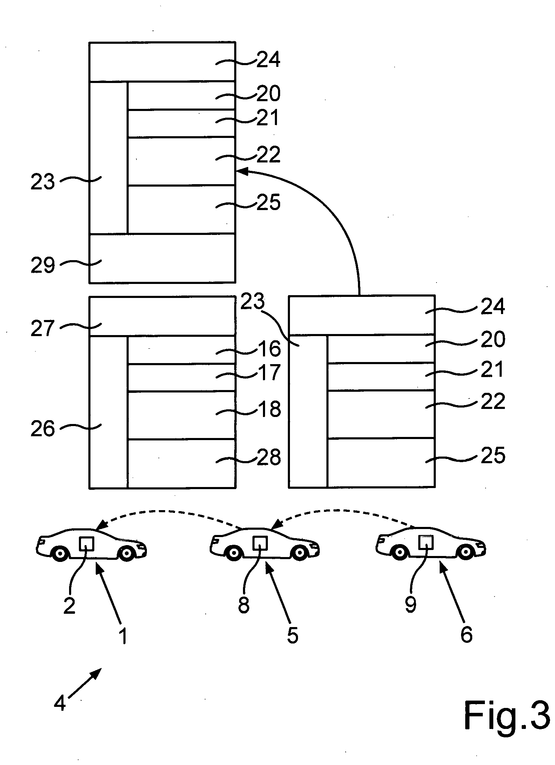

Fig. 3 zeigt nun, wie das zweite Fremdfahrzeug 6 eine zweite Antwortnachricht 23 an das erste Fremdfahrzeug 5 übermittelt. Die zweite Antwortnachricht 23 umfasst eine Antwortnachrichttransaktions-ID 24, sowie den Zeitstempel 20 des zweiten Fremdfahrzeugs 6, die Fahrzeug-ID 21 des zweiten Fremdfahrzeugs 6 und die Reiseinformation 22 des zweiten Fremdfahrzeugs 6. Weiterhin umfasst die zweite Antwortnachricht 23 eine Sensorinformation 25 des zweiten Fremdfahrzeugs 6. Durch die Sensorinformation 25 wird beispielsweise beschrieben, welche Sensorausstattung das zweite Fremdfahrzeug 6 aufweist und/oder ob eine Mobilfunkverbindung verfügbar ist. Von dem ersten Fremdfahrzeug 5 wird die zweite Antwortnachricht 23 vorzugsweise zusammen mit einer ersten Antwortnachricht 26 an die Kommunikationseinheit 2 des Kraftfahrzeugs 1 übertragen. Die erste Antwortnachricht 26 umfasst eine Anfragenachrichttransaktions-ID 27, den Zeitstempel 16 des ersten Fremdfahrzeugs 5, die Fahrzeug-ID des ersten Fremdfahrzeugs 5, die Reiseinformation 18 des ersten Fremdfahrzeugs 5 und eine Sensorinformation 28 des ersten Fremdfahrzeugs 5. Zusätzlich zu der zweiten Antwortnachricht 23 wird eine Verbindungseigenschaft 29 übermittelt, welche eine Bewertung für den Datendurchsatz zwischen dem ersten Fremdfahrzeug 5 und dem zweiten Fremdfahrzeug 6 angibt.

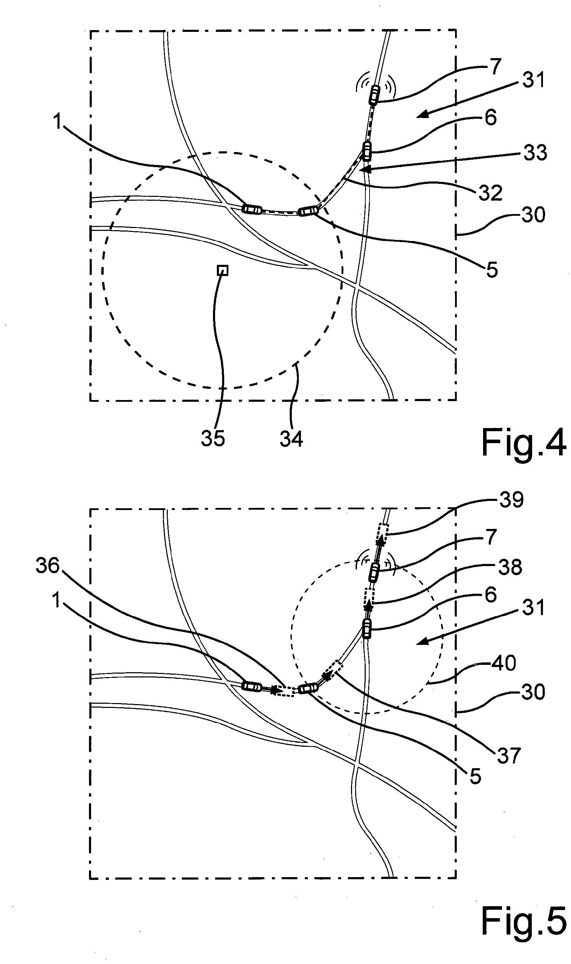

Fig. 4 zeigt nun, wie abhängig von den Antwortnachrichten 23, 26 ein Netzplan 30 eines Kommunikationsnetzes 31 bestimmt werden kann. Der Netzplan 30 zeigt also das Kommunikationsnetz 31 bestehend aus dem Kraftfahrzeug 1, dem ersten Fremdfahrzeug 5, dem zweiten Fremdfahrzeug 6 und dem dritten Fremdfahrzeug 7. Über das Kommunikationsnetz 31 kann das Kraftfahrzeug 1 eine Information, beispielsweise die Sensorinformation 25, 28 des jeweiligen Fremdfahrzeugs 5, 6, 7, empfangen. So ist es insbesondere zuerst vorgesehen, dass die Anfragenachricht 11 ungerichtet ausgesendet wird, um dann anhand der Antwortnachrichten 23, 26 den Netzplan 30 zu bestimmen. Über den Netzplan 30 kann nun ein eindeutiger Übertragungspfad 32 für eine weitere Anfragenachricht 33 des Kraftfahrzeugs 1 zum Sammeln der Information festgelegt werden. Die weitere Anfragenachricht 33 kann auch dann zu dem dritten Fremdfahrzeug 7 übermittelt werden, falls sich das dritte Fremdfahrzeug 7 außerhalb einer Reichweite 34 eines Mobilfunkmasten 35 befindet. So wird durch die ersten und zweiten Fremdfahrzeuge 5, 6, welche sich zwischen dem Kraftfahrzeug 1 und dem dritten Fremdfahrzeug 7 befinden, eine Übertragungskette gebildet, um die weitere Anfragenachricht 33 von dem Kraftfahrzeug 1 an das dritte Fremdfahrzeug 7 zu übertragen und, um die angefragte Sensorinformation oder sonstige Information über das Gebiet, welches in dem Umgebungsbereich des dritten Fremdfahrzeugs 7 angeordnet ist, beziehen zu können.

Der Netzplan 30 wird darüber hinaus mit einer Netzeigenschaft des Kommunikationsnetzes 31 zur Bewertung des Kommunikationsnetzes bereitgestellt. Auf Grundlage der Netzeigenschaft kann der eindeutige Übertragungspfad 32 festgelegt werden. Durch die Netzeigenschaft kann beispielsweise eine räumliche Abdeckung und/oder eine Übertragungsqualität des Kommunikationsnetzes 31 beschrieben werden.

Fig. 5 zeigt, wie der Netzplan 30 anhand der mittels der Antwortnachrichten 23, 26 übertragenen Reiseinformation 18, 22 in vorbestimmten zeitlichen Abständen angepasst wird. So kann der Netzplan 30 extrapoliert werden, wodurch eine Prognose für eine zukünftige Position des Kraftfahrzeugs 1 und/oder des jeweiligen Fremdfahrzeugs 5, 6 7 bestimmt wird. So wird für das Kraftfahrzeug 1 beispielsweise eine zukünftige Position 36 bestimmt, während für das erste Fremdfahrzeug 5 eine zukünftige Position 37 bestimmt wird und für das zweite Fremdfahrzeug 6 eine zukünftige Position 38 bestimmt wird. Zudem wird für das dritte Fremdfahrzeug 7 eine zukünftige Position 39 bestimmt. Die zukünftigen Positionen 36, 37, 38, 39 können insbesondere anhand der Reiseinformation 18, 22 bestimmt werden. Die Reiseinformation 18, 22 umfasst dabei beispielsweise eine Geschwindigkeit und/oder eine Beschleunigung und/oder ein Navigationsziel des Kraftfahrzeugs 1 und/oder des jeweiligen Fremdfahrzeugs 5, 6, 7. Wenn also das zweite Fremdfahrzeug 6 die zukünftige Position 38 erreicht, so befindet sich das dritte Fremdfahrzeug 7 bereits an der zukünftigen Position 39 und ist somit außerhalb einer Reichweite 40 der drahtlosen Verbindung der Kommunikationseinheit 9 des zweiten Fremdfahrzeugs 6.

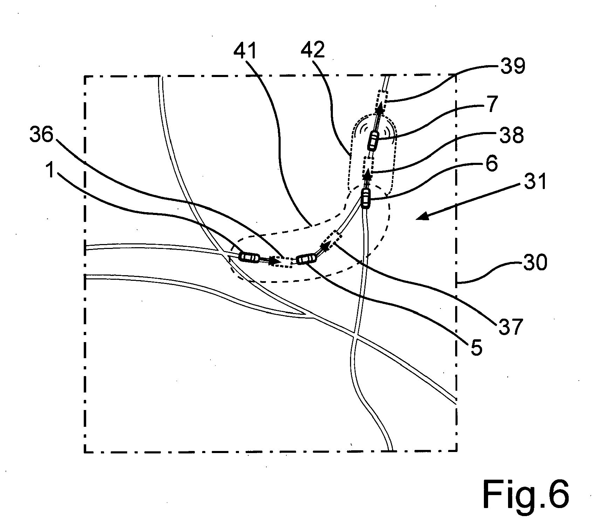

Fig. 6 zeigt, wie der Netzplan 30 gemäß dem Anpassen in den vorbestimmten zeitlichen Abständen, also der prognostizierten Bewegung der Fremdfahrzeuge 5, 6, 7 die Netzeigenschaft, insbesondere die Netzstabilität, des Kommunikationsnetzes 31 beschrieben wird. So ist für ein erstes Gebiet 41 kein Einbruch der Netzstabilität zu erwarten, da das Kraftfahrzeug 1 und die Fremdfahrzeuge 5, 6, 7 sich innerhalb ihrer jeweiligen Sendereichweite der jeweiligen Kommunikationseinheit 2, 8, 9, 10 befinden. Für ein zweites Gebiet 42 ist jedoch eine eingeschränkte Netzqualität zu erwarten, da sich das dritte Fremdfahrzeug 7 im nächsten Schritt mit seiner zukünftigen Position 39 außerhalb der Sendereichweite von dem ersten Fremdfahrzeug 5 befinden wird. Allerdings bewegt sich das Kommunikationsnetz 31 auch auf die derzeitige Position von dem dritten Fremdfahrzeug 7 zu, und das zweite Fremdfahrzeug 6 wird den Ort demnächst erreichen, weswegen eine teilweise Stabilität gegeben ist. Die Richtung, in welche sich das Kommunikationsnetz 31 bewegt, wird insbesondere durch die Bewegung des Kraftfahrzeugs 1 festgelegt.

So läuft das Verfahren beispielsweise wie folgt ab. Es wird die Anfragenachricht 11 von dem Kraftfahrzeug 1 ausgesendet und von den jeweils ersten Fremdfahrzeugen 5 empfangen. Diese senden die Anfragenachricht 11 abhängig von dem Beschränkungskriterium weiter an das jeweilige zweite Fremdfahrzeug 6. Dieses wiederum sendet die Anfragenachricht 11 weiter an das jeweilige dritte Fremdfahrzeug 7, falls die Bedingung des Beschränkungskriteriums erfüllt ist. Nun werden die Antwortnachrichten 23, 26 an das Kraftfahrzeug 1 zurückübertragen, und das Kraftfahrzeug 1 kann den Netzplan 30 des Kommunikationsnetzes 31 bestimmen. Zusätzlich kann das Kraftfahrzeug 1 auch die Netzeigenschaften des Netzplans 30 bestimmen. Anhand der Netzeigenschaften kann nun die beste Verbindung, insbesondere für den eindeutigen Übertragungspfad 32, zwischen den Fremdfahrzeugen 5, 6, 7 ermittelt werden. Die beste Verbindung kann davon abhängig gewählt werden, dass dadurch die Anforderungen konkreter Anwendungen hinsichtlich einer Übertragungsrate und/oder einer Verzögerung und/oder einer Stabilität erfüllt sind. Dabei kann auch eine Wahrscheinlichkeit abgeschätzt werden, dass die weitere Anfragenachricht 33 für die Ausführung einer konkreten Aufgabe, wie beispielsweise dem Erfassen und Zurücksenden von der Information aus dem Gebiet des jeweiligen Fremdfahrzeugs, vom Kraftfahrzeug 1 über die Fremdfahrzeuge 5, 6, 7 zu einem Zielfremdfahrzeug der Fremdfahrzeuge 5, 6, 7 im Zielgebiet geleitet werden kann und von diesem die Aufgabe ausgeführt werden kann. Sodann sollte die Information, welche anhand der ausgeführten Aufgabe ermittelt wurde, wieder über die zwischenliegenden Fremdfahrzeuge 5, 6, 7 zum Kraftfahrzeug 1 zurückgeleitet werden, bevor eines der zwischenliegenden Fremdfahrzeuge 5, 6, 7 das Kommunikationsnetz 31 verlässt. Ausgehend von dieser Wahrscheinlichkeit kann nun vom Kraftfahrzeug 1 entschieden werden, ob ein Auftrag ausgegeben wird oder nicht.

Die Übertragung der Anfragenachricht 11 sowie der Antwortnachrichten 23, 26 erfolgt insbesondere über eine von einer Mobilfunkverbindung unterschiedlichen drahtlosen Verbindung. Jedoch kann beispielsweise auch eine Mobilfunkverbindung hinzugezogen werden, um beispielsweise größere Strecken zu überbrücken. Auch lässt sich das Verfahren beispielsweise mit stationären und/oder mobilen Funkstationen, welche nicht von Fremdfahrzeugen 5, 6, 7 bereitgestellt werden, kombiniert werden. Diese Funkstationen beziehungsweise Knotenpunkte können beispielsweise reine Verstärkungsaufgaben erfüllen und lediglich die Reichweite von sendenden und/oder empfangenden Fremdfahrzeugen 5, 6, 7 erhöhen.

Die Netzeigenschaft des Kommunikationsnetzes kann beispielsweise auch durch zwischenliegende Fremdfahrzeuge 5, 6, 7 bestimmt werden und nicht nur alleine in dem Kraftfahrzeug 1. So kann die von dem jeweiligen Fremdfahrzeug 5, 6, 7 bestimmte Netzeigenschaft des Kommunikationsnetzes 31 beispielsweise auch mit der jeweiligen Antwortnachricht 23, 26 an das Kraftfahrzeug 1 zurückgegeben werden. Dadurch kann beispielsweise eine Überlastung des Kraftfahrzeugs 1 mit den Antwortnachrichten 23, 26 vermieden werden, und die Menge der Daten, die im Kommunikationsnetz 31 übertragen werden müssen, kann reduziert werden.

Somit kann das Kommunikationsnetz 31 bereitgestellt werden, welches unabhängig von Mobilfunkmasten agieren kann. Weiterhin ist bei dem Kommunikationsnetz 31 auch keine dauerhafte Verbindung zwischen dem Kraftfahrzeug 1 und den jeweiligen Fremdfahrzeugen 5, 6, 7 notwendig. Es kann gegebenenfalls die Erfassung der Netzeigenschaft und/oder das Bestimmen des Netzplans und/oder die Auftragsvergabe beziehungsweise die weitere Anfragenachricht 33 wiederholt werden. Darüber hinaus kann das Kommunikationsnetz 31 derart bereitgestellt werden, dass es nicht von einer zentralen Infrastruktur abhängig ist. Dies erhöht die Sicherheit, da Daten nicht zentral abgegriffen werden können und somit auch kein Ausfall von zentraler Infrastruktur erfolgen kann.

Das Kraftfahrzeug 1 kann die Erfassung der Netzeigenschaften beziehungsweise das Bestimmen des Netzplans 30 abschließen, wenn eine vorbestimmte Zeitspanne überschritten wird oder wenn seit einer vorbestimmten Zeitspanne keine neue Antwortnachricht 23, 26 von dem Kraftfahrzeug 1 empfangen wird.

Für die weitere Anfragenachricht 33 beziehungsweise die Auftragsvergabe und das Rücksenden von Ergebnissen beziehungsweise weiteren Antwortnachrichten kann ein Auftrag über den eindeutigen Übertragungspfad 32 und/oder eine undefinierte und/oder eine teildefinierte Verbindung erfolgen. Bei dem eindeutigen Übertragungspfad 32 sendet das Kraftfahrzeug 1 eine der Reihenfolge nach geordnete Liste der Fremdfahrzeuge 5, 6, 7, über welche der Auftrag übertragen werden soll, zusammen mit dem Auftrag aus. Jedes Fahrzeug, das die Daten der weiteren Anfragenachricht 33 empfängt, sucht seine ID in der Liste und sendet die Daten an das Fahrzeug mit der nächsten ID in der Liste weiter. Bei der Rücksendung der Ergebnisse senden die Fahrzeuge entsprechend an den vorangehenden Eintrag in der Liste weiter.

Eine Datenübertragung der Information über eine undefinierte Verbindung erfolgt wie die Erfassung der Netzeigenschaften beziehungsweise das Bestimmen des Netzplans 30. In diesem Fall wird jedoch insbesondere ein Zielort des Zielfremdfahrzeugs der Fremdfahrzeuge mit übertragen. Ebenfalls kann eine Logik mit übertragen werden, durch welche dann sichergestellt wird, dass sich die Daten mit der Aufgabe langsam dem Zielort annähern und später zu dem Kraftfahrzeug 1 zurückgesendet werden können.

Bei der teilweise definierten Übertragung beziehungsweise Verbindung sind entweder von Anfang an nicht alle zwischenliegenden Fremdfahrzeuge 5, 6, 7 definiert oder eine definierte Übertragung über den eindeutigen Übertragungspfad 32 ist in eine teilweise definierte Übertragung übergegangen, weil die definierte Verbindung nicht eingehalten werden kann. Dies kann beispielsweise eintreten, wenn eines der Fremdfahrzeuge 5, 6, 7 das Kommunikationsnetz 31 unvorhergesehen verlässt.

Falls das Kommunikationsnetz 31 erfasst ist und eine schnelle und stabile Übertragung, abhängig von den Netzeigenschaften, für die weitere Anfragenachricht 33 ermöglicht wird, können beispielsweise per Springen beziehungsweise "Hop-over" über die Fremdfahrzeuge 5, 6, 7, insbesondere zu einem vorbestimmten Zeitpunkt, große Datenmengen zuverlässig übertragen werden.

## Patentansprüche

1. Verfahren zum Bestimmen einer Netzeigenschaft eines Übertragungspfades (32) eines Kommunikationsnetzes (31) für das Sammeln von Information in einem Umfeld eines Kraftfahrzeugs (1), bei welchem mittels einer Kommunikationseinheit (2) des Kraftfahrzeugs (1) eine Anfragenachricht (11) ausgesendet wird, und die Anfragenachricht (11) von einer jeweiligen Kommunikationseinheit (8) zumindest eines ersten Fremdfahrzeugs (5) empfangen wird, wobei jeweils die Anfragenachricht (11) mittels der Kommunikationseinheit (8) jedes ersten Fremdfahrzeugs (5) an eine Kommunikationseinheit (9) zumindest eines jeweiligen zweiten Fremdfahrzeugs (6) übertragen wird,
**dadurch gekennzeichnet, dass**
durch die jeweilige Kommunikationseinheit (8) des Fremdfahrzeugs (5) eine erste Antwortnachricht (26) an die Kommunikationseinheit (2) des Kraftfahrzeugs (1) übertragen wird und mittels der Kommunikationseinheit (9) des jeweils zweiten Fremdfahrzeugs (6) eine zweite Antwortnachricht (23) zu der Kommunikationseinheit (8) des ersten Fremdfahrzeugs (5) und von dort an die Kommunikationseinheit (2) des Kraftfahrzeugs (1) übertragen wird, wobei mit den Antwortnachrichten (23, 26) eine aktuelle Position (18, 22) des jeweiligen Fremdfahrzeugs (5, 6) übertragen wird, und wobei abhängig von den Antwortnachrichten (23, 26) ein Netzplan (30) des Kommunikationsnetzes (31) durch das Kraftfahrzeug (1) bestimmt wird, und auf Grundlage des Netzplans (30) der eindeutige Übertragungspfad (32) zu einem der Fremdfahrzeuge (5, 6) für eine weitere Anfragenachricht (33) des Kraftfahrzeugs (1) zum Sammeln der Information von einem der Fremdfahrzeuge (5, 6) festgelegt wird, wobei die Netzeigenschaft des Kommunikationsnetzes (31) zur Bewertung des Kommunikationsnetzes (31) durch das Kraftfahrzeug (1) bestimmt wird, und auf Grundlage der Netzeigenschaft der Übertragungspfad (32) festgelegt wird, wobei beim Bestimmen der Netzeigenschaft des Kommunikationsnetzes (31) eine Wahrscheinlichkeit abgeschätzt wird, dass die weitere Anfragenachricht (33) für die Ausführung einer konkreten Aufgabe vom Kraftfahrzeug (1) über das erste Fremdfahrzeug (5) zu dem zweiten Fremdfahrzeug (6) weitergeleitet wird.

2. Verfahren nach Anspruch 1,
**dadurch gekennzeichnet, dass**
die jeweilige Anfragenachricht (11, 33) abhängig von zumindest einem Beschränkungskriterium an weitere Fremdfahrzeuge (7) weiter übertragen wird, wobei das Beschränkungskriterium hinsichtlich eines Abstands von dem Kraftfahrzeug (1) zu einem der Fremdfahrzeuge (5, 6, 7) und/oder einem Aufenthaltsort und/oder einer Übertragungsqualität und/oder einer maximalen Anzahl von zu verbindenden Fremdfahrzeugen (5, 6, 7) beschrieben wird.

3. Verfahren nach Anspruch 1 oder 2,
**dadurch gekennzeichnet, dass**
die Kommunikationseinheit (8) des ersten Fremdfahrzeugs (5) vor dem Übertragen der ersten Antwortnachricht (26) auf den Empfang der zweiten Antwortnachricht (23) von dem zweiten Fremdfahrzeug (6) wartet, und die zweite Antwortnachricht (23) beim Übertragen der ersten Antwortnachricht (26) von der ersten Antwortnachricht (26) umfasst wird.

4. Verfahren nach einem der vorhergehenden Ansprüche,
**dadurch gekennzeichnet, dass**
der Netzplan (30) des Kommunikationsnetzes (31) anhand der Antwortnachrichten (23, 26) in vorbestimmten zeitlichen Abständen, insbesondere durch das Kraftfahrzeug (1), angepasst wird.

5. Verfahren nach einem der vorhergehenden Ansprüche,
**dadurch gekennzeichnet, dass**
von der Information zumindest eine Reiseinformation (18, 22) des Fremdfahrzeugs (5, 6, 7) und/oder eine Sensorinformation (25, 28) des Fremdfahrzeugs (5, 6, 7) umfasst wird.

6. Verfahren nach einem der vorhergehenden Ansprüche,
**dadurch gekennzeichnet, dass**
der Netzplan (30) an zumindest eines der Fremdfahrzeuge (5, 6, 7) und/oder einen fahrzeugexternen Server übertragen wird.

7. Kraftfahrzeug (1) mit einer Kommunikationseinheit (2), **dadurch gekennzeichnet, dass** das Kraftfahrzeug (1) dazu ausgebildet ist, diejenigen Verfahrensschritte nach einem der Ansprüche 1-6 auszuführen, welche durch das Kraftfahrzeug (1) ausgeführt werden.

8. System (4) mit einem Kraftfahrzeug (1) nach Anspruch 7 und zumindest einem Fremdfahrzeug (5, 6, 7) mit einer Kommunikationseinheit (8, 9, 10), welches dazu ausgebildet ist, diejenigen Verfahrensschritte nach einem der Ansprüche 1 bis 6 auszuführen, welche durch das zumindest eine Fremdfahrzeug (5, 6, 7) ausgeführt werden.

9. System (4) nach Anspruch 8,
**dadurch gekennzeichnet, dass**
das System (4) einen fahrzeugexternen Server umfasst, welcher dazu ausgebildet ist, den von dem Kraftfahrzeug (1) übermittelten Netzplan (30) für das zumindest eine Fremdfahrzeug (5, 6, 7) bereitzustellen.

## Claims

1. Method for determining a network characteristic of a routing path (32) of a communication network (31) for collecting information in a vicinity of a motor vehicle (1), in the case of which by means of a communication unit (2) of the motor vehicle (1) a request message (11) is transmitted, and the request message (11) is received by a respective communication unit (8) of at least one first other vehicle (5), wherein in each case the request message (11) is transmitted by means of the communication unit (8) of each first other vehicle (5) to a communication unit (9) at least one respective second other vehicle (6),
**characterised in that**
via the respective communication unit (8) of the other vehicle (5) a first response message (26) is transmitted to the communication unit (2) of the motor vehicle (1) and by means of the communication unit (9) of the respective second other vehicle (6) a second response message (23) is transmitted to the communication unit (8) of the first other vehicle (5) and from there to the communication unit (2) of the motor vehicle (1), wherein with the response messages (23, 26) an actual position (18, 22) of the respective other vehicle (5, 6) is transmitted, and wherein depending on the response messages (23, 26) a network plan (30) of the communication network (31) determined by the motor vehicle (1), and on the basis of the network plan (30) the unambiguous routing path (32) to one of the other vehicles (5, 6) for a further request message (33) of the motor vehicle (1) is determined for collecting the information from one of the other vehicles (5, 6), wherein the network characteristic of the communication network (31) is determined for evaluating the communication network (31) by the motor vehicle (1), and on the basis of the network characteristic the routing path (32) is determined, wherein when determining the network characteristic of the communication network (31) a probability is estimated that the further request message (33) for the carrying out of a concrete task is forwarded from the motor vehicle (1) via the first other vehicle (5) to the second other vehicle (6).

2. Method according to claim 1,
**characterised in that**
the respective request message (11, 33) depending on at least one limiting criterion is further transmitted to further other vehicles (7), wherein the limiting criterion is described with respect to a distance from the motor vehicle (1) to one of the other vehicles (5, 6, 7) and/or a location and/or a transmission quality and/or a maximum number of other vehicles (5, 6, 7) to be connected.

3. Method according to claim 1 or 2,
**characterised in that**
the communication unit (8) of the first other vehicle (5) prior to the transmission of the first response message (26) waits for the reception of the second response message (23) from the second other vehicle (6), and the second response message (23) at the transmission of the first response message (26) is included within the first response message (26).

4. Method according to one of the preceding claims,
**characterised in that**
the network plan (30) of the communication network (31) is adapted with respect to the response messages (23, 26) in predetermined time intervals, in particular by the motor vehicle (1).

5. Method according to one of the preceding claims,
**characterised in that**
from the information at least one travel information (18, 22) of the other vehicle (5, 6, 7) and/or a sensor information (25, 28) of the other vehicle (5, 6, 7) is comprised.

6. Method according to one of the preceding claims,
**characterised in that**
the network plan (30) is transmitted to at least one of the other vehicles (5, 6, 7) and/or a server external to the vehicle.

7. Vehicle (1) with a communication unit (2), **characterised in that** the motor vehicle (1) is designed to carry out the method steps according to one of claims 1-6, which are carried out by the motor vehicle (1).

8. System (4) with a motor vehicle (1) according to claim 7 and at least one other vehicle (5, 6, 7) with a communication unit (8, 9, 10), which is designed to carry out the method steps according to one of claims 1 to 6 which are carried out by the at least one other vehicle (5, 6, 7).

9. System (4) according to claim 8,
**characterised in that**
the system (4) has a server external to the vehicle which is designed to supply to the at least one other vehicle (5, 6, 7) the network plan (30) transferred from the motor vehicle (1).

## Revendications

1. Procédé servant à définir une propriété de réseau d'un chemin de transmission (32) d'un réseau de communication (31) pour la collecte d'information dans un environnement d'un véhicule automobile (1), dans lequel un message de requête (11) est envoyé au moyen d'une unité de communication (2) du véhicule automobile (1) et le message de requête (11) est reçu par une unité de communication (8) respective d'au moins un premier véhicule tiers (5), dans lequel respectivement le message de requête (11) est transmis au moyen de l'unité de communication (8) de chaque premier véhicule tiers (5) à une unité de communication (9) d'au moins un deuxième véhicule tiers (6) respectif,
**caractérisé en ce que**
un premier message de réponse (26) est transmis à l'unité de communication (2) du véhicule automobile (1) par l'unité de communication (8) respective du véhicule tiers (5) et un deuxième message de réponse (23) est transmis au moyen de l'unité de communication (9) du deuxième véhicule tiers (6) respectif à l'unité de communication (8) du premier véhicule tiers (5) et de là à l'unité de communication (2) du véhicule automobile (1), dans lequel une position (18, 22) instantanée du véhicule tiers (5, 6) respectif est transmise avec les messages de réponse (23, 26) et dans lequel un plan de réseau (30) du réseau de communication (31) est défini par le véhicule automobile (1) en fonction des messages de réponse (23, 26) et le chemin de transmission (32) clair vers l'un des véhicules tiers (5, 6) est fixé pour un autre message de requête (33) du véhicule automobile (1) sur la base du plan de réseau (30) pour collecter l'information d'un des véhicules tiers (5, 6), dans lequel la propriété de réseau du réseau de communication (31) est définie pour évaluer le réseau de communication (31) par le véhicule automobile (1) et le chemin de transmission (32) est fixé sur la base de la propriété de réseau, dans lequel lors de la définition de la propriété de réseau du réseau de communication (31), une probabilité que l'autre message de requête (33) pour l'exécution d'une tâche concrète par le véhicule automobile (1) soit transféré par l'intermédiaire du premier véhicule tiers (5) vers le deuxième véhicule tiers (6) est estimée.

2. Procédé selon la revendication 1,
**caractérisé en ce que**
le message de requête (11, 33) respectif est transmis ultérieurement à d'autres véhicules tiers (7) en fonction d'au moins un critère de restriction, dans lequel le critère de restriction eu égard à une distance entre le véhicule automobile (1) et l'un des véhicules tiers (5, 6, 7) et/ou à un emplacement de séjour et/ou à une qualité de transmission et/ou à un nombre maximal de véhicules tiers (5, 6, 7) à connecter est décrit.

3. Procédé selon la revendication 1 ou 2,
**caractérisé en ce que**
l'unité de communication (8) du premier véhicule tiers (5) attend la réception du deuxième message de réponse (23) par le deuxième véhicule tiers (6) avant la transmission du premier message de réponse (26), et le deuxième message de réponse (23) est compris par le premier message de réponse (26) lors de la transmission du premier message de réponse (26).

4. Procédé selon l'une quelconque des revendications précédentes,
**caractérisé en ce que**
le plan de réseau (30) du réseau de communication (31) est adapté à l'aide des messages de réponse (23, 26) à des intervalles de temps prédéfinis, en particulier par le véhicule automobile (1).

5. Procédé selon l'une quelconque des revendications précédentes,
**caractérisé en ce que**
au moins une information de voyage (18, 22) du véhicule tiers (5, 6, 7) et/ou une information de capteur (25, 28) du véhicule tiers (5, 6, 7) sont comprises par l'information.

6. Procédé selon l'une quelconque des revendications précédentes,
**caractérisé en ce que**
le plan de réseau (30) est transmis à au moins un des véhicules tiers (5, 6, 7) et/ou à un serveur externe au véhicule.

7. Véhicule automobile (1) avec une unité de communication (2), **caractérisé en ce que** le véhicule automobile (1) est réalisé pour exécuter les étapes de procédé selon l'une quelconque des revendications 1 à 6, qui précisément sont exécutées par le véhicule automobile (1).

8. Système (4) avec un véhicule automobile (1) selon la revendication 7 et au moins un véhicule tiers (5, 6, 7) avec une unité de communication (8, 9, 10), qui est réalisé pour exécuter les étapes de procédé selon l'une quelconque des revendications 1 à 6, qui précisément sont exécutées par l'au moins un véhicule tiers (5, 6, 7).

9. Système (4) selon la revendication 8,
**caractérisé en ce que**
le système (4) comprend un serveur externe au véhicule, qui est réalisé pour fournir le plan de réseau (30) pour l'au moins un véhicule tiers (5, 6, 7) transféré par le véhicule automobile (1).
